# FASCICULE DE BREVET EUROPEEN

(11) **EP 0 466 590 B1**
(45) Date de publication et mention de la délivrance du brevet: **22.02.1995**
(21) Numéro de dépôt: 91401928.6
(22) Date de dépôt: 10.07.1991
(51) Int. Cl.: H04L 12/40, H04L 12/64, H04Q 11/04

(54) **Système de communication numérique pour installation téléphonique à intégration de services**
Digitales Kommunikationssystem für eine digitale dienstintegrierte Fernsprechanlage
Digital communication system for an integrated services telephone installation

(30) Priorité: 10.07.1990 FR 9008751
(43) Date de publication de la demande: 15.01.1992
(73) Titulaire: ALCATEL BUSINESS SYSTEMS, F-75008 Paris (FR)
(72) Inventeur: Allouis, Jacques, F-67540 Ostwald (FR); Fuhrer, Jean-Claude, F-67640 Fegersheim (FR); Penet, Xavier, F-67400 Illkirch Graffenstaden (FR); Saint-Ellier, Pierre, F-67640 Fegersheim (FR)
(74) Mandataire: Weinmiller, Jürgen

(56) Documents cités:
- EP-A- 0 122 765
- EP-A- 0 134 544
- WO-A-90/15493
- GB-A- 2 131 654
- US-A- 4 568 930
- US-A- 4 764 920

## Description

L'invention concerne un système de communication numérique intégré pour installation téléphonique, notamment de type intercommunication ou petit commutateur à intégration de services.

De manière connue, les communications entre les unités d'entrée-sortie, de commande et leurs auxiliaires dans les petits et moyens commutateurs téléphoniques temporels numériques s'effectuaient par l'intermédiaire d'un réseau de connexion composé d'une ou de plusieurs unités de commutation temporelle auquel les unités étaient reliées par des liaisons multiplexes temporelles partagées par plusieurs unités. De tels systèmes sont notamment évoqués dans les documents FR-A-2505497, 2531297, 2601541 de la demanderesse.

La signalisation, les octets obtenus par échantillonnage et codage à partir des signaux de parole et ceux correspondant à des données y sont transmis successivement par des voies attribuées de manière le plus souvent fixe et éventuellement groupées pour former des canaux à plus large bande sur les liaisons temporelles. Ces dernières sont regroupées par paire à raison d'une liaison unidirectionnelle pour chacun des deux sens de transmission.

Ainsi, le document GB 2 131 654 décrit un système de communication entre différentes unités terminales à travers deux bus, dont l'un est un bus à multiplexage temporel, alors que l'autre est un bus asynchrone de type transmission par paquets.

Certaines des unités terminales ont accès par des interfaces adéquats aux deux bus au choix.

Dans le document EP-A-0 122 765 on décrit un système de communication entre différentes unités terminales à travers un bus série. Le conflit entre plusieurs unités demandant accès simultanément à ce bus est réglé par un bus de contention qui reçoit des codes flexibles de priorité.

Les différents types d'unités sont répartis de manière prédéterminée dans les structures, par exemple de type baie ou armoire, chargées de les recevoir et ils ne sont pas toujours interchangeables tant dans les structures qu'au long des liaisons multiplexes temporelles, ce qui est particulièrement gênant lorsque les besoins de raccordement d'appareillages des utilisateurs sont susceptibles d'être très divers, comme cela est déjà le cas.

L'invention propose donc un système de communication numérique intégré pour installation téléphonique à intégration de services qui permette de décentraliser les fonctions de commutation et de signalisation en fonction des besoins, d'intégrer les flux d'octets d'information à transmettre, quels qu'ils soient, et de permettre une évolution du système en fonction des besoins futurs discernables.

Selon l'invention, ce but est atteint par le système tel que défini par la revendication 1.

L'invention sera précisée dans la description qui suit, en liaison avec les figures répertoriées ci-dessous.

La figure 1 présente un schéma de principe d'une installation téléphonique dotée d'un système de communication intégré selon l'invention.

La figure 2 présente un exemple de protocole de message pour système selon l'invention.

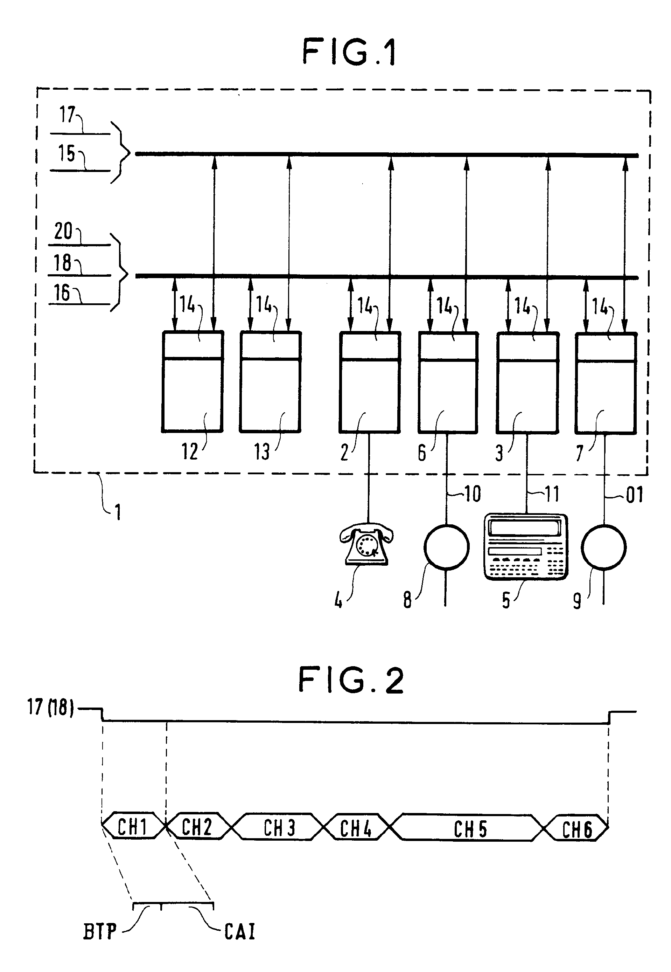

Le schéma présenté en figure 1 se rapporte à une installation téléphonique numérique à intégration de services 1, par exemple un autocommutateur de petite ou moyenne capacité ou une installation d'intercommunication. Cette installation 1 comporte une pluralité d'équipements intercommuniquant, par exemple des unités d'entrée-sortie 2, 3 de type équipement de ligne analogique ou numérique spécifiquement destinés à être reliés à des postes ou terminaux, analogiques 4 ou numériques 5, rattachés à cette installation 1.

D'autres unités d'entrée-sortie 6, 7, par exemple de type équipement de jonction analogique ou numérique, permettent d'établir des communications, à partir des postes 4 ou terminaux 5 de l'installation 1 et via cette dernière, avec d'autres postes ou terminaux de l'environnement où se situe cette installation 1, qui sont rattachés par exemple à une installation d'un réseau téléphonique commuté analogique 8 ou d'un réseau numérique par exemple à intégration de services 9 ou encore du type réseau local, respectivement raccordés à l'installation 1, via des jonctions 10, 11, 01.

L'installation 1 comporte aussi au moins une unité de commande 12, classiquement organisée autour d'un processeur et de mémoires associées quine sont pas détaillés ici, ainsi que des unités auxiliaires, telle par exemple une unité d'application 13, ici supposée dédiée à une fonction de messagerie, de commutation de paquets ou de traitement de taxes, de nombreuses autres fonctions spécialisées étant également envisageables. Le fonctionnement de l'installation 1, dans l'environnement où elle est située, implique de nombreux échanges d'information en particulier entre les différentes unités, telles les unités 2, 3, 6, 7, 12, 13 que comprend cette installation. Celles-ci sont donc reliées entre elles par un système de communication comportant un ensemble de liaisons auxquelles les unités se raccordent par l'intermédiaire d'interfaces 14 que l'on s'efforce de standardiser pour diverses raisons, notamment de commodité et d'économie.

Chaque interface 14 est plus particulièrement associée à une unité et comporte classiquement au moins un émetteur de signaux numériques, pour l'envoi de données depuis l'unité qu'elle dessert vers au moins une autre, via l'ensemble de liaisons du système de communication qui les comporte, et au moins un récepteur de signaux numériques, pour les données à recevoir, via cet ensemble de liaisons vers l'unité associée.

La description détaillée des éléments constitutifs évoqués ci-dessus ne sera pas donnée ici dans la mesure où d'une part ces éléments, qui ont déjà été évoqués dans les brevets mentionnés dans le préambule de la présente demande, sont bien connus de l'homme de métier et où d'autre part une telle description n'aurait qu'un rapport très indirect avec l'invention.

Dans le système de communication proposé, les différentes unités de l'installation 1, qui sont interconnectées, sont reliées par leurs interfaces 14 respectives à un ensemble de liaisons multiplexes temporelles formant deux bus parallèles 15 et 16 distincts qui sont exploités l'un et l'autre en mode monoémetteur/multirécepteur et qui sont prévus pour permettre une gestion répartie et flexible des communications entre les interfaces 14 qu'ils supportent, la fonction de commutation des divers signaux étant répartie sur l'ensemble formé par les deux bus 15 et 16 suivant les besoins.

A cet effet les interfaces 14 des différentes unités sont susceptibles d'accéder à chacun des deux bus de façon déterministe.

Cet accès et les échanges intervenant au cours des communications sont obtenus par mise en oeuvre d'un même protocole de message par toutes les interfaces ayant à communiquer.

Dans la réalisation proposée, le bus 15 est de type série et il est exploité en mode asynchrone, alors que le bus 16, qui est de type parallèle, est susceptible d'être exploité en mode isochrone et/ou en mode asynchrone. Chaque interface 14 désireuse d'émettre est amenée à temporairement disposer seule de l'un ou l'autre des deux bus en fonction de ses besoins pour ses communications, tant en point-à-point vers une autre interface qu'en diffusion restreinte ou non.

Dans l'exemple proposé le bus parallèle 16 comporte huit liaisons identiques et synchrones permettant la transmission en parallèle des huit bits d'un octet, le bus série 15 comporte une liaison de transmission qui est régie par une même horloge que le bus parallèle avec les liaisons duquel elle est synchrone.

La liaison multiplexe temporelle constituant le bus parallèle 16 est ici selon la recommandation G.704 du Comité Consultatif International Télégraphique et Téléphonique (CCITT), qui définit des structures de trame synchrone destinées à permettre le transfert de signaux numériques arrangés sous forme d'octets.

Une division des trames en "n" intervalles de temps égaux y est prévue, les trames successives ayant une périodicité de 125 »s.

Selon une forme de réalisation chaque liaison offre un débit de 2,048 Mb/s les bits transmis étant répartis au cours de trames successives comportant chacune trente deux intervalles de temps, chaque intervalle de temps servant à la transmission en série de huit bits.

Ceci permet classiquement l'obtention de canaux isochrones de transmission d'octets par réservation d'un ou de plusieurs intervalles de temps, de mêmes rangs respectifs parmi les "n" possibles, au cours de chacune des trames successivement en vigueur sur une liaison.

Ces canaux isochrones sont classiquement exploités pour la transmission d'octets correspondant à des signaux de parole traités par des équipements de multiplexage MIC primaire, tels que définis par la recommandation G.732 du CCITT, après échantillonnage et codage.

La structure de trame synchrone, telle que définie par la recommandation G.704 évoquée ci-dessus, est également susceptible d'être exploitée pour la transmission asynchrone d'octets, relatifs à des informations présentées sous forme numérique, qui sont transmis par paquets, au cours d'intervalles de temps successifs de trames elles-mêmes successives.

Il est donc possible d'exploiter simultanément une même liaison multiplexe avec une structure de trame, telle qu'évoquée ci-dessus, pour la transmission d'informations sous forme numérique, tant par l'intermédiaire de canaux synchrones que de canaux asynchrones, en utilisant pour ces derniers les intervalles de temps laissés disponibles par les autres, au cours des trames successives.

L'établissement de canaux isochrones et/ou de canaux asynchrones pour la transmission d'informations mises sous forme d'octets sur le bus parallèle 16 permet la transmission d'un octet à chacun créneau de temps.

Les besoins en canaux isochrones des interfaces 14 ayant à émettre sur le bus parallèle 16 sont pris en compte par une structure spécialisée qui est par exemple supervisée ou mise en oeuvre par l'unité de commande 12 de l'installation.

Cette structure intervient de manière que les canaux isochrones soient réservés d'accès aux seules unités que respectivement ils desservent et ce pour au moins la durée des communications qui respectivement les impliquent .

Cette réservation de canaux isochrones est éventuellement réalisée de manière fixe, les interfaces 14 disposant par exemple chacune d'au moins un intervalle déterminé de temps à chaque trame pour ses émissions et d'au moins un intervalle déterminé de temps pour ses réceptions, elle peut aussi être réalisée de manière évolutive, fonction des besoins, par exemple sous le contrôle de l'unité de commande 12, en fonction des demandes formulées par exemple par l'intermédiaire de messages transmis par voie asynchrone.

L'obtention d'un canal asynchrone par une interface 14, pour une émission, met en oeuvre une procédure de contention à laquelle participe toutes les interfaces 14 désirant simultanément obtenir un tel canal pour leurs émissions.

Dans une forme de réalisation, le canal asynchrone qui est susceptible d'être temporairement obtenu sur un bus par une interface, est constitué de tous les intervalles de temps quine sont pas réservés pour des canaux isochrones sur ce bus, s'il en existe, dans la ou les trames successives nécessaires à l'émission d'un message par cet interface.

Au moins en principe, toutes les interfaces 14 d'une installation 1 qui sont reliées à un bus sont susceptibles de concourir pour l'obtention d'un canal asynchrone sur ce bus.

Pratiquement chaque contention n'implique préférablement que les interfaces qui ont simultanément un besoin d'émettre.

Dans une forme de réalisation, une contention ne peut s'engager que lorsque la contention précédente a été résolue, c'est-à-dire lorsqu'une élimination progressive des interfaces initialement en concurrence n'en laisse subsister qu'une. Cette dernière, seule, est alors susceptible d'émettre en mode asynchrone, au cours des intervalles de temps laissés disponibles par les canaux isochrones simultanément exploités au cours de la ou des trames successives nécessaires à l'émission considérée.

Les interfaces non satisfaites, éventuellement rejointes par d'autres, concourent alors au cours d'une nouvelle contention.

Dans l'exemple proposé, celui, ou ici chacun des deux bus 15 et 16, susceptible d'être partiellement exploité en mode asynchrone, comporte un fil annexe d'occupation 17 ou 18 auquel toutes les interfaces 14 sont raccordées, pour que celle d'entre elles qui est autorisée à émettre se réserve, pour son émission, les intervalles de temps laissés disponibles par les canaux isochrones simultanément existants.

Cette réservation est par exemple obtenue par marquage du fil d'occupation concerné, par l'interface 14 autorisée, au moyen d'un agencement appliquant à ce fil une polarité continue déterminée de réservation, à l'aide de moyens, non représentés, cette polarité de réservation étant détectable, de manière également connue, par les autres interfaces en attente d'émission sur ce même bus.

Une nouvelle contention pour un bus est susceptible de se déclencher, par mise en oeuvre d'un processus de prise, dès apparition d'une polarité de disponibilité se substituant à la polarité de réservation sur le fil d'occupation 17 ou 18 correspondant.

Chaque interface 14 désirant se réserver, dès que possible, un canal asynchrone sur un bus, vérifie la présence ou attend l'apparition, si besoin est, de la polarité de disponibilité sur le fil d'occupation associé à ce bus et tente alors d'émettre un message de prise, soit sur le bus lui-même, dans le cas du bus série 15, soit sur un fil annexe de contention 20, dans le cas du bus parallèle 16. Dans les deux cas, cette émission s'effectue au rythme fixé par un signal d'horloge commun délivré par exemple par la base de temps, non figurée, de l'installation 1.

Les divers agencements nécessaires à de telles contentions ne sont pas développés ici dans la mesure où il sont susceptibles d'être aisément transposés de la réalisation proposée dans la demande de brevet français 2638591 de la demanderesse.

Les messages de prise apparaissant sur le fil de contention 20 ou sur le bus série 15 sont susceptibles d'être créés par n'importe laquelle des interfaces ayant besoin d'émettre en asynchrone.

Chaque message de prise comporte identiquement un champ de contention CH1 en en-tête, par exemple un ou plusieurs octets, ce champ est composé d'un code de priorité tournante BPT, comprenant un nombre déterminé de bits, et d'un code d'accès CAI correspondant à l'adresse fonctionnelle de l'interface émettrice.

Lorsque plusieurs interfaces 14 sont simultanément en attente d'émission asynchrone sur le même bus, elles tentent simultanément de réserver l'usage des intervalles de temps disponibles en asynchrone sur ce bus, chacune à son seul profit.

A cet effet, chacune de ces interfaces 14 tente d'imposer, sur le fil de contention concerné, la suite de bits correspondant au message de prise qu'elle veut envoyer. Classiquement l'une des deux valeurs que chaque bit est susceptible de prendre est considérée comme dominante et autorise la ou les interfaces l'ayant produit à continuer la contention, celles qui ont tenté d'imposer l'autre valeur étant renvoyées à la contention suivante.

Chaque interface dispose d'une priorité pondérée, traduite par un code BTP, particulier et évolutif, qui associe par exemple des bits prenant en compte une priorité fixe, attribuée à l'interface 14 considérée en fonction du rôle de l'unité qu'elle dessert plus spécifiquement, et une priorité variable prenant en compte le nombre d'essais infructueux depuis la précédente réservation réussie par cette interface au moyen de ce fil de contention.

Au premier créneau de temps d'une nouvelle contention, toutes les interfaces en compétition pour un bus tentent simultanément de forcer sur le fil de contention du bus la valeur correspondant au premier bit du code BTP qui leur correspond pour cette contention.

Est alors éliminée de la contention en cours, toute interface en compétition qui lit sur le fil de contention concerné, une valeur de bit autre que celle qu'elle tentait de forcer.

Cette ou chacune de ces interfaces éliminées modifie en conséquence son code BTP de priorité, en vue de sa prochaine tentative.

Les créneaux de temps suivants permettent d'éliminer progressivement les interfaces restant en compétition jusqu'à ce qu'il n'en reste qu'une qui force successivement sur le fil de contention considéré tous les bits de son code de priorité BTP, avant d'émettre son code d'accès CAI.

Ce code d'accès CAI est suivi d'un ou de plusieurs champs formant un message de gestion dont la longueur peut-être variable et qui comporte par exemple :
- un champ CH2 précisant le type du message qui va être transmis en asynchrone par le bus concerné et l'adresse géographique ou fonctionnelle de la ou des interfaces destinataires,
- un champ CH3 précisant la longueur de ce message à venir,
- un champ CH4 précisant l'adresse géographique de l'interface émettrice,
- un champ CH5 de données de longueur variable;
- un module CH6 de contrôle de parité de type CRC.

Les messages de gestion sont par exemple des messages prioritaires de commande, tels que des ordres d'initialisation, d'activation et de désactivation ou encore des messages de données.

Le bus série est apte à assurer la transmission unidirectionnelle de messages en mode asynchrone, avec un débit relativement limité. Il permet éventuellement la transmission de signalisations entre les unités desservies par les interfaces 14.

Le bus parallèle 16 permet de disposer d'un grand nombre d'intervalles de temps avec la même horloge bit que le bus série 15, ici 256 intervalles de temps par trame de 125»s. Il permet un fonctionnement en mode circuit où les communications sont établies en point à point ou en diffusion, restreinte ou non, à partir d'un point, un ou deux canaux isochrones correspondants chacun à un intervalle de temps étant réservé(s) sur le bus suivant que la transmission est mono ou bidirectionnelle.

Le bus parallèle 16 permet aussi une exploitation en réseau local numérique dans laquelle chaque message est susceptible d'être transmis par les liaisons parallèles de ce bus soit en point à point soit en diffusion à partir d'un point, c'est-à-dire d'une interface 14, au cours des intervalles de temps successifs laissés disponibles par les canaux isochrones éventuellement présents simultanément au cours d'une ou de plusieurs trames successives.

La mise à disponibilité de deux bus ayant des débits différents permet la mise en fonctionnement simultanée d'équipements ayant besoin de débits d'informations éventuellement très dissemblables et/ou d'un nombre importants d'équipements avec une grande souplesse dans une installation.

Elle permet aussi d'obtenir une sécurité supplémentaire, dans la mesure où le bus parallèle permet d'assurer au moins un service minimum en cas d'indisponibilité temporaire du bus série, le basculement des transmissions de ce dernier sur les liaisons de l'autre étant tout à fait réalisable.

## Revendications

1. Système de communication numérique pour installation téléphonique (1), du type à intégration de services, interconnectant une pluralité d'unités d'entrée-sortie (2, 3, 6, 7), de type équipement de ligne ou de jonction, pour l'établissement de communications entre des postes (4) ou terminaux téléphoniques (5), au moins une unité de commande (12), classiquement organisée autour d'un processeur et de mémoires associées, et éventuellement une ou des unités auxiliaires (13), caractérisé en ce qu'il comporte en parallèle un bus (15) de type série et un bus (16) de type parallèle auxquels toutes les unités sont identiquement connectées par des interfaces individuelles standardisées (14), chaque interface étant apte à disposer temporairement de l'un et/ou de l'autre des deux bus pour ses émissions vers au moins l'une des autres interfaces, soit sous forme isochrone par l'intermédiaire d'au moins un canal isochrone qui lui est réservé, au moins temporairement, sur l'un des bus selon une structure d'attribution supervisée par l'unité de commande de l'installation, soit sous forme asynchrone sur l'un des bus dont cette interface a temporairement obtenu la disponibilité pour une émission de message par une procédure de contention entre interfaces, ledit canal regroupant des voies temporelles du bus concerné qui sont alors inexploitées pour des canaux isochrones.

2. Système de communication numérique intégré, selon la revendication 1, caractérisé en ce qu'il comporte des moyens auxiliaires de contention (17, 18, 20) permettant la réservation temporaire des voies temporelles d'un bus, quine sont pas exploitées à l'émission pour des canaux isochrones, par celle des interfaces qui est la plus prioritaire parmi celles interfaces qui sont simultanément en compétition pour l'émission de leurs messages en asynchrone sur ce bus.

3. Système de communication numérique, selon la revendication 2, caractérisé en ce que les moyens auxiliaires de contention associés au bus parallèle (16) comportent un fil d'occupation (18) et un fil de contention (20), communs aux interfaces (14), pour l'auto-sélection de celle des interfaces simultanément en contention qui est alors la plus prioritaire et qui force l'émission d'un message personnel de prise, aux dépens de ceux des autres interfaces en compétition, en série sur le fil de contention , si la disponibilité de ce dernier pour une contention est signalée par le fil d'occupation (18) correspondant, autrement marqué indisponible par celle des interfaces qui est alors en émission asynchrone sur ce bus parallèle.

4. Système de communication numérique, selon la revendication 2, caractérisé en ce que les moyens auxiliaires de contention associés au bus série (15) comportent un fil d'occupation (17), communs aux interfaces (14), pour l'auto-sélection de celle des interfaces simultanément en contention qui est alors la plus prioritaire et qui force l'émission d'un message personnel de prise, aux dépens de ceux des autres interfaces en compétition, en série sur le bus série lui-même, si la disponibilité de ce dernier pour une contention est signalée par le fil d'occupation (17) correspondant, autrement marqué indisponible par celle des interfaces qui est alors en émission asynchrone sur ce bus série.

5. Sytème de communication numérique, selon au moins l'une des revendications 1 à 4 précédentes, caractérisé en ce que le bus parallèle et le bus série sont régis par une horloge commune, le bus parallèle comportant huit liaisons multiplexes temporelles parallèles analogues à la liaison unique que comporte le bus série.

## Patentansprüche

1. Digitales Nachrichtensystem für eine Telefonanlage (1) vom dienstintegrierten Typ, das eine Mehrzahl von Eingangs-Ausgangseinheiten (2, 3, 6, 7) vom Typ der Leitungseinrichtung oder Leitungsverbindung zum Aufbau von Nachrichtenverbindungen zwischen Endgeräten (4) oder Telefonapparaten (5), mindestens eine Steuereinheit (12), die wie üblich einen Prozessor und zugeordnete Speicher enthält, und ggf. eine oder mehrere Hilfseinheiten (13) miteinander verbindet, dadurch gekennzeichnet, daß das System einen Serienbus (15) und einen Parallelbus (16) in Parallelanordnung enthält, an die alle Einheiten identisch über standardisierte individuelle Schnittstellen (14) angeschlossen sind, wobei jede Schnittstelle vorübergehend den einen und/oder den anderen Bus zum Aussenden in Richtung auf mindestens eine der anderen Schnittstellen verwenden kann, und zwar entweder isochron über mindestens einen isochronen Kanal, der zumindest vorübergehend auf einer der Busleitungen gemäß einer der von der Steuereinheit der Anlage überwachten Zuteilungsstruktur für diese Schnittstelle reserviert ist, oder asynchron auf einer der Busleitungen, über die diese Schnittstelle vorübergehend die Genehmigung zum Aussenden der Nachricht mittels einer Streitschlichtungsprozedur zwischen Schnittstellen errungen hat, wobei der Kanal Zeitschlitze der betreffenden Busleitung zusammenfaßt, die dann für isochrone Kanäle gerade nicht benutzt werden.

2. Integriertes digitales Nachrichtensystem nach Anspruch 1, dadurch gekennzeichnet, daß es Streitschlichtungs-Hilfsmittel (17, 18, 20) aufweist, die die vorübergehende Reservierung der Zeitkanäle auf einem Bus ermöglichen, welche nicht zur Aussendung für isochrone Kanäle benutzt werden, wobei die Reservierung zugunsten derjenigen Schnittstelle erfolgt, die die höchste Priorität unter den Schnittstellen besitzt, die gleichzeitig in Konkurrenz die Aussendung ihrer Nachrichten im asynchronen Modus auf diesem Bus verlangen.

3. Digitales Nachrichtensystem nach Anspruch 2, dadurch gekennzeichnet, daß die Streitschlichtungs-Hilfsmittel, die dem parallelen Bus (16) zugeordnet sind, einen Belegdraht (18) und einen Streitschlichtungsdraht (20) besitzen, die allen Schnittstellen (14) gemeinsam sind, um die automatische Auswahl derjenigen unter den gleichzeitig in Streitschlichtung stehenden Schnittstellen zu ermöglichen, die die höchste Priorität hat und die die Aussendung einer eigenen Belegungsnachricht zu Lasten derjenigen der anderen konkurrierenden Schnittstellen in Reihe auf dem Streitschlichtungsdraht erzwingt, wenn die Verfügbarkeit dieses Drahts für eine Streitschlichtung vom entsprechenden Belegdraht signalisiert wird, wobei dieser Draht ansonsten als nicht verfügbar durch die Schnittstelle markiert wird, die gerade auf diesem parallelen Bus asynchron sendet.

4. Digitales Nachrichtensystem nach Anspruch 2, dadurch gekennzeichnet, daß die Streitschlichtungs-Hilfsmittel, die dem Serienbus (15) zugeordnet sind, einen allen Schnittstellen (14) gemeinsamen Belegdraht (17) zur automatischen Auswahl derjenigen unter den gleichzeitig in Streitschlichtung stehenden Schnittstellen aufweisen, die die höchste Priorität hat und die die Aussendung einer eigenen Belegungsnachricht zu Lasten derjenigen der anderen konkurrierenden Schnittstellen in Reihe auf dem Serienbus selbst erzwingt, wenn die Verfügbarkeit dieser Busleitung für eine Streitschlichtung durch den entsprechenden Belegdraht (17) signalisiert wird, wobei dieser Draht ansonsten als nicht verfügbar durch die Schnittstelle markiert wird, die gerade auf diesem Serienbus asynchron sendet.

5. Digitales Nachrichtensystem nach mindestens einem der vorhergehenden Ansprüche 1 bis 4, dadurch gekennzeichnet, daß der parallele Bus und der Serienbus von einem gemeinsamen Takt gesteuert werden, wobei der parallele Bus acht parallele Zeitmultiplexverbindungen entsprechend der einen Verbindung enthält, die der Serienbus aufweist.

## Claims

1. Digital communication system for telephone installations (1) of the integrated services type interconnecting a plurality of input-output units (2, 3, 6, 7) of the line or line interface circuit equipment type for setting up calls between telephones (4) or telephone terminals (5), at least one control unit (12) conventionally based on a processor and associated memories and optionally one or more auxiliary units (13), characterised in that it includes in parallel a serial bus (15) and a parallel bus (16) to which all the units are identically connected by standardised individual interfaces (14), each interface being adapted to have temporary access to one or both buses for sending to at least one other interface, either isochronously by means of at least one isochronous channel reserved to it at least temporarily on one of the buses using an assignment structure supervised by the control unit of the installation or asynchronously on one of the buses to which this interface has temporarily obtained access to send a message by means of an inter-interface contention procedure, said channel combining time channel time slots of the bus concerned which are not used for isochronous channels.

2. Integrated digital communication system according to claim 1 characterised in that it includes auxiliary contention means (17, 18, 20) for temporarily reserving channel time slots of a bus which are not used for sending by isochronous channels by whichever of the interfaces has the highest priority among those interfaces which are simultaneously competing to send messages asynchronously on this bus.

3. Digital communication system according to claim 2 characterised in that the auxiliary contention means associated with the parallel bus (16) include a busy wire (18) and a contention wire (20) common to the interfaces (14) for self-selection of whichever of the interfaces simultaneously in contention has the highest priority at that time and which forces the sending of a personal seizure message taking precedence over those of the other competing interfaces, serially on the contention wire, if the availability of the latter for a contention is indicated by the respective busy wire (18), which is otherwise marked unavailable by whichever of the interfaces is then sending asynchronously on the parallel bus.

4. Digital communication system according to claim 2 characterised in that the auxiliary contention means associated with the serial bus (15) include a busy wire (17) common to the interfaces (14) for self-selection of whichever of the interfaces simultaneously in contention has the highest priority at that time and which forces the sending of a personal seizure message taking precedence over those of the other competing interfaces, serially on the serial bus itself, if the availability of the latter for a contention is indicated by the respective busy wire (17), which is otherwise marked unavailable by whichever of the interfaces is at that time sending asynchronously on the serial bus.

5. Digital communication system according to at least one of the foregoing claims 1 to 4 characterised in that the parallel bus and the serial bus are clocked by a common clock, the parallel bus including eight parallel time-division multiplex links analogous to the single link of the serial bus.
